# EUROPÄISCHE PATENTANMELDUNG

(11) **EP 3 929 830 A1**
(43) Veröffentlichungstag der Anmeldung: **29.12.2021**
(21) Anmeldenummer: 20182041.2
(22) Anmeldetag: 24.06.2020
(51) Int. Cl.: G06Q 10/00, G06Q 10/06, G06Q 10/10, G07C 1/00, G07C 9/28

(54) **VERFAHREN ZUR AUTOMATISCHEN ARBEITSZEITERFASSUNG UND/ODER POSITIONSBESTIMMUNG EINER PERSON IN EINEM VORGEGEBENEN UMFELD UND ERFASSUNGSSYSTEM**

(71) Anmelder: Proseco Software GmbH, 77975 Ringsheim (DE)
(72) Erfinder: BIHL, Wolfgang, 77975 Ringsheim (DE)
(74) Vertreter: Specht, Peter

(57) **Zusammenfassung**

Ein Verfahren zur automatischen Arbeitszeiterfassung und/oder Positionsbestimmung einer Person in einem vorgegebenen Umfeld, mit den folgenden Schritten:
a. Bereitstellen eines Bluetooth-basierten Erkennungssystems umfassend zumindest einer Anmeldeeinheit zur Positionierung an der Arbeitsstelle und zumindest einem Bluetooth-Anhänger, welcher von der zu erfassenden Person mitführbar ist,
wobei der Bluetooth-Anhänger einen Datensatz mit einer individuellen Kennung zur Identifizierung der Person aufweist;
b. Scannen der Anmeldeeinheit nach einem auf die Anmeldeeinheit abgestimmten Bluetooth-Anhänger;
c. Senden eines Signals, insbesondere umfassend den Datensatz, durch den Bluetooth-Anhänger;
d. Empfang des Signals durch die Anmeldeeinheit bei gleichzeitiger Ermittlung des Zeitpunkts des Empfangs durch ein Zeiterfassungssystem der Anmeldeeinheit und/oder der Position der Person unter Einbeziehung von geographischen Daten hinsichtlich des Orts der Anmeldeeinheit;
sowie ein Erkennungssystem

## Beschreibung

Die vorliegende Erfindung betrifft ein Verfahren zur automatischen Arbeitszeiterfassung und/oder Positionsbestimmung einer Person in einem vorgegebenen Umfeld, insbesondere in einem Umfeld, welches durch ein Bluetooth-Netz abgedeckt ist, sowie ein hierfür verwendetes Erfassungssystem basierend auf der Bluetooth-Technologie.

Bekannte Systeme zur Zeiterfassung arbeiten mit Karten oder Batches, mittels denen sich ein Mitarbeiter an einem Log-In-Terminal eines Unternehmens einloggen kann. Derartige Systeme beruhen z.B. auf RFID oder NFC-Technologie, also auf Radiowellentechnologie oder Nahfeldkommunikation. Problematisch daran ist die geringe Distanz, welche zwischen dem RFID oder NFC-Transponder und dem Terminal besteht. In größeren Unternehmen kann sich daher ein Stau vor dem Terminal in Stoßzeiten bilden.

Ein weiteres bekanntes allerdings rechtlich umstrittenes System der Arbeitszeitüberwachung ist ein sogenanntes GPS-Tracking. Dieses hat allerdings Nachteile bei Funklöchern. Z.B. auf Baustellen ohne guten Empfang ist eine Erfassung durch ein solches System nicht möglich.

Schließlich sind im Kontext des Standes der Technik der vorliegenden Erfindung noch weitere Druckschriften als Stand der Technik zu nennen. Hierzu gehören u.a. die EP 2 653 772 B1, die CN 108898691 A, die US 9,020,848 A. Viele dieser Geräte nutzt allerdings ein Mobiltelefon zur Verbindung.

Insbesondere lässt oftmals ein Betriebssystem auf einem Mobiltelefon zumeist kein dauerhaftes Scannen nach Bluetooth-Signalquellen aufgrund des hohen Stromverbrauchs zu.

Es ist daher Aufgabe der vorliegenden Erfindung ein Verfahren und ein Erkennungssystem bereitzustellen, welches energieeffizient mit handlichen Erkennungselementen arbeitet, welche zudem manipulationssicher sind.

Diese Aufgabe wird von einem mit den Merkmalen des Anspruches 1 gelöst.

Ein erfindungsgemäßes Verfahren zur automatischen Arbeitszeiterfassung und/oder Positionsbestimmung einer Person in einem vorgegebenen Umfeld, weist die folgenden Schritte auf:
a) Ein Bereitstellen eines Bluetooth-basierten Erkennungssystems umfassend zumindest eine Anmeldeeinheit zur Positionierung an der Arbeitsstelle und zumindest einen Bluetooth-Anhänger, welcher von der zu erfassenden Person mitführbar ist,

Besagte Anmeldeeinheit und Bluetooth-Anhänger werden nach Ihrer Lieferung an einen Kunden an die Arbeitsstelle der zu erfassenden Person positioniert und die Person wird mit dem Bluetooth-Anhänger versehen. Arbeitsstelle ist in diesem Kontext ein weiter Begriff und kann z.B. eine Baustelle, ein Catering-Eventbereich, einen Büroarbeitsplatz, einen Eingang eines Unternehmens, also die Eingangspforte, als auch einen Dienstwagen (z.B. bei Außendienstmitarbeitern) umfassen.

Der Bluetooth-Anhänger kann einen Datensatz mit einer individuellen Kennung zur Identifizierung der Person aufweisen. Dabei kann es sich z.B. um eine Mac-Adresse handeln, welche dem Namen der Person oder einem Namenscode entspricht.

Ein Scannen der Anmeldeeinheit nach einem auf die Anmeldeeinheit abgestimmten Bluetooth-Anhänger kann insbesondere im kontinuierlichen Betrieb erfolgen. Die Abstimmung des Bluetooth Anhängers auf die Anmeldeeinheit kann vorzugsweise derart erfolgen, dass das Signal des Bluetooth-Anhängers zusätzlich zur Kennung einen Code übermittelt, welcher anzeigt, dass der Bluetooth-Anhänger Teil des jeweiligen Erkennungssystems ist. Nutzen z.B. auf einer Baustelle zwei Firmen ein zweites Erkennungssystem, so erkennt die Anmeldeeinheit anhand des Codes, ob das eingehende Bluetooth-Signal zur weiteren Datenverarbeitung bestimmt ist oder zu einem Bluetooth-Anhänger des zweiten Erkennungssystems gehört. In diesem Fall werden die eingehenden Daten nicht erfasst und/oder dauerhaft gespeichert.

Zeitgleich oder anschließend kann ein Senden eines Signals, insbesondere umfassend den Datensatz, durch den Bluetooth-Anhänger erfolgen. Wird das Signal übermittelt, so kann eine Weiterverarbeitung der Daten erfolgen, z.B. ein Arbeitszeitbeginn unter Einbeziehung der Uhrzeit oder ein Arbeitszeitende. Im Fall eines Netzwerks aus mehreren im Unternehmen verteilten Anmeldeeinheiten kann die Position der Person innerhalb des Unternehmens bzw. der Anmeldeeinheit, welche das stärkste Signal des Bluetooth-Anhängers erkennt, abgefragt werden.

Der Empfang des Signals durch die Anmeldeeinheit kann bei gleichzeitiger Ermittlung des Zeitpunkts des Empfangs durch ein Zeiterfassungssystem der Anmeldeeinheit und/oder der Position der Person unter Einbeziehung von geographischen Daten hinsichtlich des Orts der Anmeldeeinheit. Dadurch kann durch das Erkennungssystem die Arbeitszeit der identifizierten und erfassten Person erfasst bzw. protokolliert werden oder die Position der jeweiligen Person innerhalb des Unternehmens oder beides.

Insbesondere kann als besagtes vorgegebenes Umfeld neben dem Gebiet, in welchem eine Arbeit erbracht wird, auch Busse, Messehallen usw. verstanden werden. Bevorzugt ist das gesamte vorgegebene Umfeld durch Positionierung einer oder mehrerer Anmeldeeinheiten, welche sich zu einem Netzwerk ergänzen, mit einem Bluetooth-Empfangsnetzwerk abgedeckt.

Dabei kann die Anzahl der verwendeten Anmeldeeinheiten von der Größe der jeweiligen Umgebung abhängt. Bei einem Bus kann eine Anmeldeeinheit ausreichen während bei einer Messehalle auf mehrere Anmeldeeinheiten, z.B. verteilt an den Seiten, vorhanden sein können. Sinkt die Signalstärke des Bluetooth-Anhängers bei einer ersten Anmeldeeinheit und steigt sie bei einer zweiten Anmeldeeinheit, so bewegt sich die betreffende Person auf die zweite Anmeldeeinheit zu, wobei der Bluetooth-Anhänger permanent, vorzugsweise permanent zyklisch, ein Signal bzw. Datensignal sendet.

Weitere vorteilhafte Ausgestaltungen des erfindungsgemäßen Verfahrens sind Gegenstand der Unteransprüche.

Es ist von Vorteil, wenn dem empfangenen Datensatz in Schritt d) der Zeitpunkt des Empfangs unter Erstellung eines Datenpaar zugeordnet wird und dass vorzugsweise ein dauerhaftes Speichern des Datenpaares auf einem Datenspeicher der Anmeldeeinheit zur weiteren Datenverarbeitung erfolgt. Somit kann z.B. eine tabellarische Anzeige der Arbeitszeit erfasst werden.

Dem empfangenen Datensatz in Schritt d) kann vorteilhaft der geographische Ort der Anmeldeeinheit zum Zeitpunkt des Empfangs unter Erstellung eines Datenpaares zugeordnet werden. Dieses Datenpaar kann an eine weitere Anmeldeeinheit innerhalb eines Netzwerks von mehreren, vorzugsweise identischen, Anmeldeeinheiten übermittelt werden.

Bevorzugt kann zudem ein dauerhaftes Speichern des Datenpaares auf einem Datenspeicher der Anmeldeeinheit erfolgen. Dadurch kann z.B. die Aufenthaltszeit in einer Kantine erfasst und als Pausenzeit von der Arbeitszeit abgezogen werden. Das Datenpaar mit der geografischen Angabe kann um eine Zeitangabe ergänzt werden.

Das Scannen der Anmeldeeinheit nach der Anwesenheit von Bluetooth-Anhängern kann vorzugsweise kontinuierlich erfolgen. Der Scan kann allerdings getaktet erfolgen. Da die Reichweite von Bluetooth begrenzt ist, kann eine Person mit Bluetooth-Anhängern lediglich beim Passieren erfasst werden oder sofern er sich in unmittelbarer Nähe zur Anmeldeeinheit befindet. Beim Passieren kann beispielsweise ein Arbeitszeitbeginn erfasst werden und eine Anwesenheit in einem bestimmten Sektor des Unternehmens. Ein nochmaliges Passieren erfasst das Arbeitszeitende. Passiert eine Person mit dem Bluetooth-Anhänger mehrere Anmeldeeinheiten, so kann eine Positionsübermittlung erfolgen, in welchem Sektor des Unternehmens sich die Person befindet.

Der Bluetooth-Anhänger wiederum strahlt vorzugsweise eine Kennung, vorzugsweise umfassend eine Mac-Adresse aus, die er permanent und vorzugsweise zyklisch, besonders bevorzugt alle 1-5 Sekunden, über ein Bluetooth-Sendemodul bzw. eine Bluetooth-Sendeeinheit ausstrahlt. Bei dieser Form des Datenaustauschs kann ein "Pairing" entfallen, welches u.a. eine Empfangseinheit für den Bluetooth-Anhänger voraussetzt.

Vorteilhaft kann das Erkennungssystem daher mehrere Anmeldeeinheiten umfassen, welche als Netzwerk zum gegenseitigen Datenaustausch miteinander verbunden sind, derart dass nach den Empfang des Signals die geographische Position der empfangenden Anmeldeeinheit und die Identität der jeweiligen Person an das Netzwerk übermittelt wird. Selbstverständlich kann auch der Zeitpunkt der Erfassung des Bluetooth-Signals an der jeweiligen Anmeldeeinheit erfasst und an das Netzwerk übertragen werden.

Der Betrieb eines erfindungsgemäßen Erkennungssystems zur automatischen Arbeitszeiterfassung und/oder Positionsbestimmung einer Person in einem vorgegebenen Umfeld erfolgt nach einem erfindungsgemäßen Verfahren, wobei der Bluetooth-Anhänger vorzugsweise als ein BLE-Anhänger ausgebildet ist, so dass der Stromverbrauch zum Senden eines Signals vergleichsweise gering ist.

Insbesondere kann der Bluetooth-Anhänger ein Element zur Deaktivierung des Sendemoduls bzw. Sendeelements aufweisen. Ein Empfangsmodul oder eine Empfangsfunktion muss der Bluetooth-Anhänger nicht zwingend aufweisen.

Die Anmeldeeinheit kann vorzugsweise als Mobiltelefon, Tablet und/oder Laptop ausgebildet sein. Dies trifft vorzugsweise auch auf alle weiteren Anmeldeeinheiten eines Netzwerks zu.

Der Bluetooth-Anhänger verfügt vorteilhaft über geringen einen Raumbedarf von weniger als 7 cm³, vorzugsweise weniger als 3 cm³.

Zum Datenaustausch vorzugsweise mit einem Sicherheitssystem, der Lohnbuchhaltung oder der Personalabteilung ist es von Vorteil, wenn die Anmeldeeinheit internetfähig ist, also eine W-LAN Sendeeinheit aufweist zur Übermittlung der Daten an Rechner außerhalb des Erkennungssystems zur weiteren Datenverarbeitung. Für Updates und zur Fernwartung kann zudem eine W-LAN Empfangseinheit vorgesehen sein.

Weiterhin kann die Anmeldeeinheit zur geografischen Positionsbestimmung einen GPS-Sensor aufweisen. Ein solcher GPS-Sensor vorzugsweise eine Datensende- und Empfangseinheit für GPS-Daten aufweisen.

Die Anmeldeeinheit kann zudem einen Betriebsmodus zur manuellen Korrektur der erfassten Arbeitszeit aufweisen.

Weiterhin erfindungsgemäß ist die Verwendung des erfindungsgemäßen Erkennungssystems zur Überprüfung der Berechtigung einer Person in Verbindung mit einem Personen-Einlasssystem, insbesondere mit einem Schließsystem. Durch Feststellung der Identität der Person durch die Signalauswertung des Bluetooth-Anhängers kann der Einlass für autorisierte Personen, z.B. in Spezialbereiche innerhalb des Unternehmens, freigegeben werden.

Besonders bevorzugt kann der Erkennungssystems auch außerhalb einer räumlich abgeschlossenen Arbeitsstelle eingesetzt werden, also dort, wo sich üblicherweise eine Zeiterfassung schwierig gestaltet. Dabei kann es sich um eine Baustelle handeln, welche sich territorial verändern kann. Beispielsweise im Straßenbau wird die Baustelle stets weiter versetzt. Darüber hinaus kann das Erkennungssystem bei einem Catering Event eingesetzt werden, beispielsweise einem Outdoor-Catering. Schließlich kann das Erkennungssystem in einem Fahrzeug mitgeführt werden und eine Zeiterfassung auf einer Dienstreise, z.B. bei Außendienstmitarbeitern, Marketingmitarbeitern oder Fernfahrern, gewährleisten.

Die Erfindung hat zahlreiche weitere Vorteile und wird nachfolgend anhand mehrerer Ausführungsbeispiele mit Bezug auf die beigefügte Figur näher erläutert. Es zeigen:

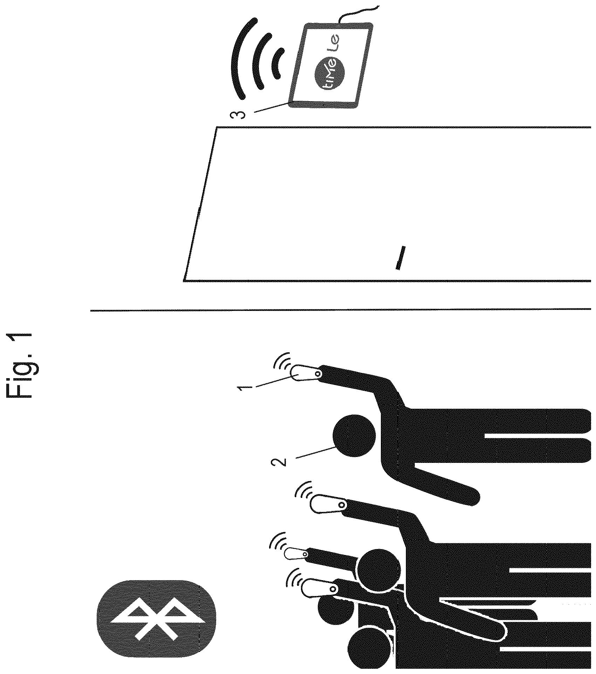

Fig. 1 eine schematische Ansicht eines erfindungsgemäßen Erkennungssystems.

Bluetooth hat sich als Fachbegriff der elektronischen Kommunikationstechnik etabliert. Bluetooth bezeichnet gemeinhin einen Industriestandard für eine Datenübertragung zwischen Geräten auf kurze Distanz via Funktechnik. Bluetooth Geräte gehören zur Oberklasse der sogenannten Short Range Devices (Geräten mit kurzer Reichweite).

Im Bereich der Bluetooth-Technologie sind derzeit die Varianten Bluetooth 1, 2, 3, 4 und 5 bekannt. Besondere Unterklassen sind die Varianten Bluetooth Low Energie - BLE, als eine Variante mit geringem Energieverbrauch, und Smart Bluetooth bekannt. Eine Erklärung zur Unterscheidung der einzelnen Varianten finden sich in der Fachliteratur und u.a. auch auf Wikipedia-Datenbank.

In der vorliegenden Erfindung geht es um die Anwendung der vorgenannten Bluetooth-Datenübertragung im Rahmen eines erfindungsgemäßen Verfahrens und einer erfindungsgemäßen Anordnung.

Die Anordnung umfasst eine Log-ln Anmeldeeinheit 3 und zumindest einen Bluetooth-Anhänger 1, vorzugsweise jedoch eine Vielzahl solcher Bluetooth-Anhänger.

Fig. 1 zeigt Bluetooth-Anhänger mit einem Raumbedarf in der bevorzugten Größe von weniger als 7 cm³, vorzugsweise weniger als 3 cm³ in Abgrenzung zu einem Handy und verfügt, wie bei Bluetooth-Geräten üblich, über ein Bluetooth-Funkmodul. Das Wort "Anhänger" bezieht sich vorwiegend auf die Größe des Bluetooth Geräts. Der Anhänger kann, muss jedoch nicht zwingend eine Öse oder eine Befestigungsvorrichtung aufweisen, sondern er kann durch eine gesonderte Haltevorrichtung gehalten werden. In einer erweiterten Variante eines Bluetooth-Anhängers im Rahmen der vorliegenden Erfindung kann dieser als eine Smartwatch ausgebildet sein. In weiterer Differenzierung zu einem Mobiltelefon weist der Bluetooth-Anhänger vorzugsweise keine Elektronikbausteine zum Aufbau einer Telefonverbindung auf.

Besonders bevorzugt weist der Bluetooth-Anhänger lediglich ein Sende- jedoch kein Empfangsmodul auf, so dass er manipulier sicher ist.

Die Bluetooth-Anhänger können vorzugsweise dabei in einen Punkt-zu-Mehrpunkt-Netzwerk die Slave-Module bilden, welche mit der Log-In-Anmeldeeinheit als Mastermodul verbunden oder zumindest verbindbar sein können.

Im Rahmen des vorliegenden Verfahrens erfolgt zunächst das Bereitstellen eines Bluetooth-Anhängers 1 zu einem Nutzer 2. Der Bluetooth-Anhänger ist auf den Nutzer personalisiert.

Dies erfolgt vorzugsweise derart, dass der Bluetooth-Anhänger eine eindeutige Kennung, vorzugsweise umfassend eine Mac-Adresse aufweist, die er zyklisch, vorzugsweise alle 1-5 Sekunden über das Bluetooth-Funkmodul ausstrahlt. Die Mac-Adresse oder eine andere Form der Kennung ermöglicht eine Zuordnung des Bluetooth-Anhängers zu einer bestimmten Person. Der Bluetooth-Anhänger wird durch ein Computerprogramm, vorzugsweise durch die Log-In-Anmeldeeinheit der jeweiligen Person zugewiesen. Weiterhin kann ein Arbeitszeitmodell spezifisch für diese Person im Datenspeicher der Log-In-Anmeldeeinheit hinterlegt sein oder durch den Bluetooth-Anhänger an die besagte Log-In-Anmeldeeinheit übermittelt werden.

Zur Steuerung der Taktrate der Signalsendung bzw. der Kennung kann der Bluetooth-Anhänger zudem eine Steuer- und Auswerteeinheit aufweisen. Weiterhin weist der Bluetooth-Anhänger einen Datenspeicher auf, auf welchem die Kennung hinterlegt ist.

Die Steuerung des Bluetooth-Anhängers erfolgt vorzugsweise hinsichtlich der Dauer und der Abstände der Signale zum Verbindungsaufbau mit der Log-In-Anmeldeeinheit.

Die Signalübertragung erfolgt insbesondere durch eine LE-(Low-Energy) Variante der Bluetooth-Technologie.

Der Bluetooth-Anhänger kann als ein sogenannter BLE-Anhänger, auch BLE-Tag genannt, ausgebildet sein. BLE steht für Bluetooth low energy. Der geringe Energieverbrauch ermöglicht es den Bluetooth-Anhänger mit einer Batterie zu betrieben und insbesondere mit einer Knopfzelle, was eine weitergehende Miniaturisierung des Anhängers ermöglicht.

Die Log-ln Anmeldeeinheit 3 kann ein stationäres Endgerät oder, besonders bevorzugt, ein mobiles End-Gerät, wie z.B. ein Handy, ein Tablet, ein Laptop oder dergleichen sein. Das mobile End-Gerät bietet besondere Vorteile für den Einsatz an Stellen, wo eine digitale Arbeitszeiterfassung aufgrund schlechter Internet-Verbindung und häufigen Verkehrs unterschiedlicher Berufsgruppen, z.B. Gewerke, besonders schwierig zu verifizieren ist. Eine typische Anwendung ist beispielsweise ein Ölfeld, eine Baustelle, Fernfahrer oder der Anlagenbau.

Nach deren Bereitstellung scannt die Log-ln Anmeldeeinheit, insbesondere in einem LE-Betriebsmodus, bzw. Low-Energy Betriebsmodus bezogen auf die Bluetooth-Datenübertragung, in der Umgebung nach bekannten Bluetooth-, insbesondere BLE-, Anhängern. Die Umgebung beträgt dabei vorzugsweise zumindest 10 Meter, insbesondere zwischen 20-100 Meter.

Protokolliert werden insbesondere die aktuelle Zeit und Geoinformationen der von der Log-In-Anmeldeeinheit erkannten Bluetooth-Anhänger.

Dies ermöglicht sowohl die Zeiterfassung für den Arbeitsantritt und das Arbeitsende einerseits, andererseits wird auch eine Positionserkennung innerhalb eines Unternehmens möglich, wodurch die Auffindbarkeit des Mitarbeiters erleichtert wird.

Die verbesserte Auffindbarkeit ist diesbezüglich z.B. von Vorteil, wenn ein Kollege einen wichtigen Anruf entgegennimmt und die Bestimmungsperson des Anrufs ausfindig machen muss.

Die Informationen werden von der jeweiligen Log-ln Anmeldeeinheit auf einem lokalen Datenspeicher gespeichert.

Die Log-In-Anmeldeeinheit kann vorteilhaft über ein GPS und/oder WLAN-Sende- und Empfangsmodul verfügen und kann vorzugsweise in größeren Abständen, z.B. nach zumindest 1 Stunde oder nach einem Arbeitstag oder noch länger, die ermittelten Zeit- und Positionsdaten an einen anderen Rechner z.B. via WLAN übermitteln. Besonders bevorzugt können durch die Log-ln Anmeldeeinheit per WLAN oder Funknetz diese Daten an einen WEB-Server übermittelt werden, der dann mehrere End-Geräte bzw. Log-In-Anmeldeeinheiten synchronisieren kann. Die Anmeldeeinheiten können vorteilhaft untereinander kommunizieren, z.B. um ein Bewegungsschema zu erstellen. Dies ist z.B. wichtig bei der Verifizierung der Abläufe eines Wachgangs eines Security-Unternehmens um ggf. Sicherheitslücken besser festzustellen.

Diese Funktion kann beispielsweise auch bei der Lohnbuchhaltung genutzt werden oder zur Sicherheitsüberprüfung bei der Arbeit in sensiblen Bereichen, so dass z.B. festgestellt werden kann, ob sich Nutzer z.B. sich gerade im Labor oder in seinem Büro befindet.

Eine Besonderheit des erfindungsgemäßen Verfahrens und der erfindungsgemäßen Vorrichtung ist, dass das Log-In-Modul ein dauerhaftes, vorzugsweise getaktetes, Signal zur Verbindungsherstellung mit weiteren Bluetooth-Anhängern sendet. Dieser Betriebsmodus der Verbindungsherstellung bzw. des Verbindungsaufbaus ist für das Log-In-Modul erfahrungsgemäß energieintensiv, sodass das Pairing bei den meisten Bluetooth Geräte nur bis zum Verbindungsaufbau mit einem Bluetooth-Slave erfolgt und danach für weitere Geräte aktiviert werden muss. Im Fall der vorliegenden Erfindung wird allerdings ein kontinuierlich, vorzugsweise ein kontinuierlich-getakteter, Verbindungsaufbau durchgeführt, um eine Ortung nach Bluetooth-Anhängern als Slaves durchzuführen.

Ergänzend zur herkömmlichen Bluetooth Technologie kann der Bluetooth-Slave zum Pairing ergänzend noch eine NFC-Übertragung einsetzen.

Bei der vorbeschriebenen Variante der Verbindung zwischen Bluetooth Anhänger und der Log-In-Anmeldeeinheit ist ein sogenanntes Bluetooth-Pairing nicht notwendig.

Durch das Arbeitszeitmodell können zu den Personen Über- oder Minderstunden automatisch ermittelt werden. Eine manuelle Veränderung von Arbeitszeit zu Freizeit oder umgekehrt wird zugelassen jedoch wird die Veränderung protokolliert und visualisiert.

Eine Verbindung kann vorzugsweise von einem beliebigen End-Gerät ausgehen, das sich dadurch zum Master über die antwortenden Slaves erhebt. Das Log-ln Anmeldeeinheit kann beispielsweise ein Android Tablet mit Bluetooth-LE Technologie sein.

Die Log-ln Anmeldeeinheit scannt, vorzugweise permanent, die Umgebung nach bekannten Bluetooth-Anhängern und/oder möglichen neuen Bluetooth-Anhängern. Dabei kann zusätzlich zur Uhrzeit und dem Standort (also welche Anmeldeeinheit bei einem Netzwerk aus mehreren Anmeldeeinheiten), sondern auch die Entfernung des Anhängers zur Anmeldeeinheit erfasst werden.

Durch die permanente Erkennung ist eine stabile externe Stromversorgung (Stromnetz, Powerbank und/oder Solaranbindung) zur Energieversorgung der Log-In-Anmeldeeinheit 3 von Vorteil. Ein Stromausfall über 3-4 Stunden kann jedoch auch über einen internen Akku bzw. eine interne Stromversorgung überbrückt werden.

Als Zusatzfunktion kann nach Feststellung der Identität der jeweiligen Person beim Passieren der Log-In-Anmeldeeinheit auch eine Überprüfung einer Zugangsberechtigung erfolgen. Hierfür kann die Log-In-Anmeldeeinheit mit einem Schließ- und/oder Alarmsystem kommunizieren.

Pro zu erfassende Person sollte mind. ein Bluetooth Anhänger vorgesehen sein, die von der Person zur automatischen Zeiterfassung mitgeführt werden muss. Dieser Anhänger übermittelt in einem kurzen Zeitintervall, z.B. alle 3 Sekunden, eine eindeutige Identifizierung z.B. aktuell die MAC-Adresse und Herstellerinformationen.

Wie bereits beschrieben, können mehrere Log-In-Anmeldeeinheiten z.B. als mobile Erfassungs-Geräte, zu einem Netzwerk angeordnet werden. Dabei sind die Anmeldeeinheiten miteinander hinsichtlich ihres Datenaustauschs untereinander derart synchronisiert, dass die aktuelle Position einer erfassten Person innerhalb eines Unternehmens angezeigt werden kann. Dadurch kann z.B. erkannt werden, ob sich die Person in einer Kantine, einem Besprechungsraum oder auf dem regulären Arbeitsplatz befindet.

Wenn sich die Log-In-Anmeldeeinheit bewegt (z.B. in einem Kraftfahrzeug) können durch Sensoren zur Positionsbestimmung, z.B. GPS-Sensoren, auch die GEO-Daten im Zeitverlauf protokolliert und zur Visualisierung des Aufenthaltsortes der erkannten Personen verwendet. Dies ist bei der Arbeitszeiterfassung von Außendienstmitarbeitern, Fernfahrern, Catering oder bei Besorgungstätigkeiten von Interesse. Zugleich erlaubt es, analog zu einem Fahrtenbuch die Verifizierung des genutzten Fahrzeugs. Ggf. kann dadurch das Führen eines Fahrtenbuchs vorteilhaft entfallen und eine bessere Verifizierung zwischen Dienst- und Privatnutzung eines Fahrzeuges erfolgen.

Optional kann der Sendebetrieb des Bluetooth-Anhänger über einen Knopf deaktiviert werden, beispielsweise wenn eine Privatfahrt angetreten wird oder ein Arbeitsende trotz Verbleibs am Arbeitsplatz angezeigt werden soll.

Weiterhin kann optional im Rahmen einer Korrektureingabe an der Log-In-Anmeldeeinheit ein Editieren der erfassten Arbeitszeit pro Mitarbeiter durch die Person selbst und/oder durch eine berechtigte Person (z.B. den Vorgesetzten) ermöglicht werden.

Diese Korrektureingaben kann, vorzugsweise nicht nur an den Log-ln Anmeldeeinheiten, sondern auch über Browser Applikationen bzw. Smartphone-Apps ermöglicht werden.

Die eine oder mehrere Log-ln Anmeldeeinheit können die Daten einer jeden erfassten Person über ein entsprechendes Computerprogramm grafisch aufarbeiten, auswerten und/oder weiterleiten, z.B. an eine Personalabteilung und/oder an die Geschäftsleitung.

Darüber hinaus kann die Log-ln Anmeldeeinheit die Daten auch via Internet oder durch Auslesen der Daten an Lohnprogramme bzw. an einen Steuerberater übermitteln.

### Bezugszeichen

- 1: Bluetooth Anhänger
- 2: Zu erfassende Person
- 3: Anmeldeeinheit

## Patentansprüche

1. Verfahren zur automatischen Arbeitszeiterfassung und/oder Positionsbestimmung einer Person (2) in einem vorgegebenen Umfeld, **gekennzeichnet durch die folgenden Schritte:**
a. Bereitstellen eines Bluetooth-basierten Erkennungssystems umfassend zumindest eine Anmeldeeinheit (3) zur Positionierung an der Arbeitsstelle und zumindest einen Bluetooth-Anhänger (1), welcher von der zu erfassenden Person mitführbar ist,
wobei der Bluetooth-Anhänger (1) einen Datensatz mit einer individuellen Kennung zur Identifizierung der Person aufweist;
b. Scannen der Anmeldeeinheit (3) nach einem auf die Anmeldeeinheit abgestimmten Bluetooth-Anhänger (1);
c. Senden eines Signals, insbesondere umfassend den Datensatz, durch den Bluetooth-Anhänger (1);
d. Empfang des Signals durch die Anmeldeeinheit (3) bei gleichzeitiger Ermittlung des Zeitpunkts des Empfangs durch ein Zeiterfassungssystem der Anmeldeeinheit (3) und/oder der Position der Person (2) unter Einbeziehung von geographischen Daten hinsichtlich des Orts der Anmeldeeinheit (3).

2. Verfahren nach Anspruch 1, **dadurch gekennzeichnet, dass** dem empfangenen Datensatz in Schritt d) der Zeitpunkt des Empfangs unter Erstellung eines Datenpaares zugeordnet wird;
und dass vorzugsweise ein Speichern des Datenpaares auf einem Datenspeicher der Anmeldeeinheit (3) erfolgt.

3. Verfahren nach Anspruch 1 oder 2, **dadurch gekennzeichnet, dass** dem empfangenen Datensatz in Schritt d) der geographische Ort der Anmeldeeinheit (3) zum Zeitpunkt des Empfangs unter Erstellung eines Datenpaares zugeordnet wird;
und dass vorzugsweise ein Speichern des Datenpaares auf einem Datenspeicher der Anmeldeeinheit (3) erfolgt.

4. Verfahren nach Anspruch 1 oder 2, **dadurch gekennzeichnet, dass** das Scannen der Anmeldeeinheit (3) kontinuierlich erfolgt.

5. Verfahren nach einem der vorhergehenden Ansprüche, **dadurch gekennzeichnet, dass** das Erkennungssystem mehrere Anmeldeeinheiten (3) umfasst, welche als Netzwerk zum gegenseitigen Datenaustausch miteinander verbunden sind, derart dass nach den Empfang des Signals die geographische Position der empfangenden Anmeldeeinheit (3) an das Netzwerk übermittelt wird.

6. Erkennungssystem zur automatischen Arbeitszeiterfassung und/oder Positionsbestimmung einer Person (2) in einem vorgegebenen Umfeld durch ein Verfahren nach einem der vorhergehenden Ansprüche, wobei der Bluetooth-Anhänger (1) vorzugsweise als ein BLE-Anhänger ausgebildet ist.

7. Erkennungssystem nach Anspruch 6, **dadurch gekennzeichnet, dass** die Anmeldeeinheit (3), insbesondere alle Anmeldeeinheiten, als mobiles Endgerät, vorzugsweise als Mobiltelefon, Tablet und/oder Laptop ausgebildet ist, wobei das Scannen vorzugsweise in einem Bluetooth Low Energy Modus bzw. BLE-Modus erfolgt.

8. Erkennungssystem nach einem der vorhergehenden Ansprüche 6 oder 7, **dadurch gekennzeichnet, dass** der Bluetooth-Anhänger (1) einen Raumbedarf von weniger als 7 cm³, vorzugsweise weniger als 3 cm³, aufweist.

9. Erkennungssystem nach einem der vorhergehenden Ansprüche, **dadurch gekennzeichnet, dass** die Anmeldeeinheit (3) einen Betriebsmodus zur manuellen Korrektur der erfassten Arbeitszeit aufweist.

10. Erkennungssystem nach einem der vorhergehenden Ansprüche, **dadurch gekennzeichnet, dass** der Bluetooth-Anhänger (1) zumindest eine Sendeeinheit und ein Bedienelement, vorzugsweise einen Knopf, zur Deaktivierung der Sendeeinheit aufweist.

11. Erkennungssystem nach einem der vorhergehenden Ansprüche, **dadurch gekennzeichnet, dass** die Anmeldeeinheit (3) internetfähig ist und vorzugsweise eine W-LAN Sendeeinheit, besonders bevorzugt eine W-LAN Sende- und Empfangseinheit aufweist, zum Austausch mit externen Rechnern.

12. Erkennungssystem nach einem der vorhergehenden Ansprüche, **dadurch gekennzeichnet, dass** die Anmeldeeinheit (3) hinsichtlich ihrer geografischen Lage ortungsfähig ist und besonders bevorzugt einen GPS-Sensor aufweist.

13. Verwendung eines Erkennungssystems nach einem der vorhergehenden Ansprüche zur Überprüfung der Berechtigung einer Person (2) in Verbindung mit einem Personen-Einlasssystem, insbesondere mit einem Schließsystem.

14. Verwendung eines Erkennungssystems nach Anspruch 7 außerhalb einer räumlich abgeschlossenen Arbeitsstelle, vorzugsweise einer Baustelle, einem Catering Event und/oder einer Dienstreise.

## Geänderte Patentansprüche

### Geänderte Patentansprüche gemäss Regel 137(2) EPÜ.

1. Verfahren zur automatischen Arbeitszeiterfassung einer Person (2) in einem vorgegebenen Umfeld, **gekennzeichnet durch die folgenden Schritte:**
a. Bereitstellen eines Bluetooth-basierten Erkennungssystems umfassend zumindest eine Anmeldeeinheit (3) welche an der Arbeitsstelle positioniert wird und zumindest einen Bluetooth-Anhänger (1), welcher von der zu erfassenden Person mitgeführt wird,
wobei der Bluetooth-Anhänger (1) einen Datensatz mit einer individuellen Kennung zur Identifizierung der Person aufweist;
b. Scannen der Anmeldeeinheit (3) nach einem auf die Anmeldeeinheit abgestimmten Bluetooth-Anhänger (1);
c. Senden eines Signals, insbesondere umfassend den Datensatz, durch den Bluetooth-Anhänger (1);
d. Empfang des Signals durch die Anmeldeeinheit (3) bei gleichzeitiger Ermittlung des Zeitpunkts des Empfangs durch ein Zeiterfassungssystem der Anmeldeeinheit (3) und/oder der Position der Person (2) unter Einbeziehung von geographischen Daten hinsichtlich des Orts der Anmeldeeinheit (3).

2. Verfahren nach Anspruch 1, **dadurch gekennzeichnet, dass** dem empfangenen Datensatz in Schritt d) der Zeitpunkt des Empfangs unter Erstellung eines Datenpaares zugeordnet wird;
und dass vorzugsweise ein Speichern des Datenpaares auf einem Datenspeicher der Anmeldeeinheit (3) erfolgt.

3. Verfahren nach Anspruch 1 oder 2, **dadurch gekennzeichnet, dass** dem empfangenen Datensatz in Schritt d) der geographische Ort der Anmeldeeinheit (3) zum Zeitpunkt des Empfangs unter Erstellung eines Datenpaares zugeordnet wird;
und dass vorzugsweise ein Speichern des Datenpaares auf einem Datenspeicher der Anmeldeeinheit (3) erfolgt.

4. Verfahren nach Anspruch 1 oder 2, **dadurch gekennzeichnet, dass** das Scannen der Anmeldeeinheit (3) kontinuierlich erfolgt.

5. Verfahren nach Anspruch 4, **dadurch gekennzeichnet, dass** kein Pairing zwischen der Anmeldeeinheit (3) und den Bluetooth-Anhängern erfolgt.

6. Verfahren nach einem der vorhergehenden Ansprüche, **dadurch gekennzeichnet, dass** das Erkennungssystem mehrere Anmeldeeinheiten (3) umfasst, welche als Netzwerk zum gegenseitigen Datenaustausch miteinander verbunden sind, derart dass nach den Empfang des Signals die geographische Position der empfangenden Anmeldeeinheit (3) an das Netzwerk übermittelt wird.

7. Verfahren nach einem der vorhergehenden Ansprüche, **dadurch gekennzeichnet, dass** der Bluetooth-Anhänger (1) vorzugsweise als ein BLE-Anhänger ausgebildet ist.

8. Verfahren nach Anspruch 7, **dadurch gekennzeichnet, dass** die Anmeldeeinheit (3), insbesondere alle Anmeldeeinheiten, als mobiles Endgerät, vorzugsweise als Mobiltelefon, Tablet und/oder Laptop ausgebildet ist, wobei das Scannen vorzugsweise in einem Bluetooth Low Energy Modus bzw. BLE-Modus erfolgt.

9. Verfahren nach einem der vorhergehenden Ansprüche 7 oder 8, **dadurch gekennzeichnet, dass** der Bluetooth-Anhänger (1) einen Raumbedarf von weniger als 7 cm³, vorzugsweise weniger als 3 cm³, aufweist.

10. Verfahren nach einem der vorhergehenden Ansprüche, **dadurch gekennzeichnet, dass** die Anmeldeeinheit (3) einen Betriebsmodus zur manuellen Korrektur der erfassten Arbeitszeit aufweist.

11. Verfahren nach einem der vorhergehenden Ansprüche, **dadurch gekennzeichnet, dass** der Bluetooth-Anhänger (1) zumindest eine Sendeeinheit und ein Bedienelement, vorzugsweise einen Knopf, zur Deaktivierung der Sendeeinheit aufweist.

12. Erkennungssystem nach einem der vorhergehenden Ansprüche, **dadurch gekennzeichnet, dass** die Anmeldeeinheit (3) internetfähig ist und vorzugsweise eine W-LAN Sendeeinheit, besonders bevorzugt eine W-LAN Sende- und Empfangseinheit aufweist, zum Austausch mit externen Rechnern.

13. Verfahren nach einem der vorhergehenden Ansprüche, **dadurch gekennzeichnet, dass** die Anmeldeeinheit (3) hinsichtlich ihrer geografischen Lage ortungsfähig ist und besonders bevorzugt einen GPS-Sensor aufweist.

14. Verfahren nach einem der vorhergehenden Ansprüche, **dadurch gekennzeichnet, dass** das Erkennungssystem zur Überprüfung der Berechtigung einer Person (2) in Verbindung mit einem Personen-Einlasssystem, insbesondere mit einem Schließsystem, eingesetzt wird.

15. Verfahren nach einem der vorhergehenden Ansprüche, **dadurch gekennzeichnet, dass** das Erkennungssystem außerhalb einer räumlich abgeschlossenen Arbeitsstelle, vorzugsweise einer Baustelle, einem Catering Event und/oder einer Dienstreise eingesetzt wird.

16. Verfahren nach einem der vorhergehenden Ansprüche, **dadurch gekennzeichnet, dass** zusätzlich zur Arbeitszeiterfassung eine Positionsbestimmung der Person (2) erfolgt.
